# EUROPÄISCHE PATENTSCHRIFT

(11) **EP 2 056 183 B1**
(45) Veröffentlichungstag und Bekanntmachung des Hinweises auf die Patenterteilung: **09.01.2019**
(21) Anmeldenummer: 08167947.4
(22) Anmeldetag: 30.10.2008
(51) Int. Cl.: G06F 1/32, G06F 1/26, H02J 9/00

(54) **Elektronische Stromversorgungseinheit, elektronisches Gerät, sowie Verfahren zur Stromsparsteuerung eines elektronischen Peripheriegerätes**
Electronic power supply unit, electronic device and method of power saving in an electronic peripheral device
Unité d'alimentation en courant électronique, appareil électronique, et procédé destiné à la commande d'économie de courant d'un appareil périphérique électronique

(30) Priorität: 02.11.2007 DE 102007052880
(43) Veröffentlichungstag der Anmeldung: 06.05.2009
(73) Patentinhaber: Fujitsu Technology Solutions Intellectual Property GmbH, 80807 München (DE)
(72) Erfinder: Lück, Thomas, 86179 Augsburg (DE)
(74) Vertreter: Epping - Hermann - Fischer

(56) Entgegenhaltungen:
- EP-A2- 0 689 351
- US-A- 6 052 291
- US-A- 6 107 698
- US-A1- 2007 047 270
- US-B1- 6 321 340

## Beschreibung

Die Erfindung betrifft ein elektronisches Gerät mit
- einer Stromversorgungseinheit, die erste spannungswandelnde Elemente aufweist, um aus einer primärseitigen Wechselspannung eine sekundärseitige Gleichspannung zur Versorgung des elektronischen Geräts zu erzeugen,
- mindestens einer Schnittstelle,
- einem Schaltelement, durch welches die ersten spannungswandelnden Elemente von der primärseitigen Wechselspannung getrennt werden können, sowie
- einer Geräte-Steuereinheit, welcher über die mindestens eine Schnittstelle zumindest zeitweise eine Versorgungsspannung zugeführt werden kann,
wobei die Geräte-Steuereinheit dazu eingerichtet ist, eine Betätigung des Schaltelements in Abhängigkeit des Leistungsbedarfs des elektronischen Geräts zu veranlassen und wobei die Geräte-Steuereinheit dazu eingerichtet ist, das Schaltelement zu öffnen, während sie mit Energie aus der primärseitigen Wechselspannung versorgt wird, wohingegen die Geräte-Steuereinheit zum Schließen des Schaltelements mit Energie aus der Schnittstelle versorgt wird.

Außerdem betrifft die Erfindung ein Verfahren zur Stromsparsteuerung eines elektronischen Peripheriegerätes mit einer Geräte-Steuereinheit, wobei das Peripheriegerät über eine Schnittstelle mit einem Computer verbunden werden kann und über eine Stromversorgungseinheit mit elektrischer Energie aus einem Wechselstromnetz versorgt wird.

Viele elektronische Geräte, wie z. B. Notebooks, externe Laufwerke und Computermonitore, verfügen über eine eigene externe Stromversorgungseinheit. Im ausgeschalteten Zustand der Geräte oder im Standby-Betrieb, z. B. für Wake-on-LAN Anwendungen, bleiben die Stromversorgungseinheiten dauerhaft mit dem Stromnetz verbunden und erzeugen Verlustleistungen in der Größenordnung einiger Watt, welche in Form von Wärme verloren gehen. Bei einem Computersystem kommen mehrere Geräte und damit auch mehrere Stromversorgungseinheiten zum Einsatz. Dadurch summiert sich die Verlustleistung.

Vielfach werden abschaltbare Steckdosen oder Netzfreischalter eingesetzt, um die Stromversorgungseinheiten vollständig vom Stromnetz zu trennen. Dies gestaltet eine selektive Abschaltung einzelner Stromversorgungseinheiten und Geräte während des Betriebs anderer Geräte schwierig, da meist alle Geräte eines Computersystems an einer gemeinsamen Steckdose oder einem Netzfreischalter angeschlossen sind.

Der Einsatz von selbst steuernden Master-Slave-Steckdosen ermöglicht zwar eine gewisse Selektivität in der Versorgung der Geräte, die Steckdosen selbst verbrauchen jedoch ähnlich einer herkömmlichen Stromversorgungseinheit ebenfalls dauerhaft Energie zur gegenseitigen Überwachung.

Aus den Druckschriften EP 0 875 983 A2 sowie US 6 052 291 A sind Stromversorgungseinheiten bekannt, welche primäre spannungswandelnde Elemente vom Wechselstromnetz trennen können, um die Verlustleistung im ausgeschalteten Betrieb der Geräte zu reduzieren. Allerdings müssen bei diesen Lösungen sekundäre spannungswandelnde Elemente zur Überwachung des Betriebszustandes eines angeschlossenen Gerätes auch im ausgeschalteten Zustand des Gerätes dauerhaft mit Energie versorgt werden, wodurch weiterhin Verlustleistung entsteht.

Die Druckschrift US 6,107,698 A zeigt ein elektronisches Gerät der eingangs genannten Art. Bei diesem Gerät erfolgt eine Betätigung des Schaltelements, durch das die ersten spannungswandelnden Elemente von der primärseitigen Wechselspannung getrennt werden können, in Abhängigkeit davon, ob das Gerät selbst eingeschaltet oder ausgeschaltet wird. Die Lehre der Druckschrift US 6,107,698 A hat jedoch den Nachteil, dass das Gerät unnötig Energie verbraucht, wenn es eingeschaltet ist, jedoch gerade keine Verwendung findet. Dieser Nachteil kann insbesondere bei Peripheriegeräten, z.B. Druckern, entstehen, die meistens dauerhaft eingeschaltet sind, jedoch nur über einen vergleichsweise kurzen Zeitraum in Verbindung mit anderen Geräten, z.B. Computern, verwendet werden.

Die Druckschrift US 2007/0047270 zeigt ein Netzteil zur Stromversorgung einer Last. Das Netzteil weist einen internen Last-Detektor zum Detektieren einer an das Netzteil angeschlossenen Last auf. Über ein gesteuertes Schaltelement können spannungswandelnde Elemente von der primärseitigen Wechselspannung getrennt werden. Allerdings müssen bei dieser Lösungen Standby-Komponenten zur Überwachung des Betriebszustandes auch im getrennten Zustand der Last dauerhaft mit Energie der primärseitigen Wechselspannung versorgt werden, wodurch weiterhin Verlustleistung entsteht.

Der Erfindung liegt die Aufgabe zugrunde, ein elektronisches Gerät aufzuzeigen, welches über eine verbesserte Energieeffizienz verfügt. Außerdem soll ein Verfahren zur Stromsparsteuerung eines elektronischen Peripheriegerätes angegeben werden, welches eine verbesserte Energieeffizienz ermöglicht.

Diese Aufgabe wird in einem ersten Aspekt durch ein elektronisches Gerät der eingangs genannten Art dadurch gelöst, dass
- das elektronische Gerät ein Peripheriegerät ist, das über die Schnittstelle an einen Computer angeschlossen werden kann,
- die Geräte-Steuereinheit dazu eingerichtet ist, zu erkennen, ob der Computer mit dem Peripheriegerät über die Schnittstelle verbunden ist und
- die Geräte-Steuereinheit das Schaltelement veranlasst, die ersten spannungswandelnden Elemente von der primärseitigen Wechselspannung sofort oder mit zeitlicher Verzögerung zu trennen, wenn der Computer nicht über die Schnittstelle mit dem Peripheriegerät verbunden ist.

Die erfindungsgemäße Lösung hat den Vorteil, die Stromversorgungseinheiten von elektronischen Geräten komplett abzuschalten, falls die Geräte nicht in Betrieb sind oder nicht benötigt werden. Dadurch entsteht keinerlei Verlustleistung in den Stromversorgungseinheiten, da alle Wärme erzeugenden Komponenten gänzlich vom Wechselstromnetz getrennt sind. Die Netztrennung kann dabei von dem zu seiner Versorgung angeschlossenen Gerät gesteuert werden.

Die Geräte-Steuereinheit ist dazu eingerichtet, das Schaltelement zu öffnen, während sie mit Energie aus der primärseitigen Wechselspannung versorgt wird. Zudem wird die Geräte-Steuereinheit zum Schließen des Schaltelements mit Energie aus der Schnittstelle versorgt. Der Vorgang der Netztrennung erfolgt also mittels Energie aus dem Stromnetz. Soll die Stromversorgungseinheit anschließend wieder an das Stromnetz angeschlossen werden, so wird die dazu notwendige Energie aus der Schnittstelle bezogen.

Bevorzugt ist die Stromversorgungseinheit eine externe Stromversorgungseinheit, wobei das elektronische Gerät durch die Geräte-Steuereinheit dazu eingerichtet ist, der Stromversorgungseinheit zu signalisieren, ob das Schaltelement die ersten spannungswandelnden Elemente mit der Wechselspannung verbinden soll. Die externe Ausführung der Stromversorgungseinheit erlaubt eine Platz sparende Bauweise des elektronischen Gerätes. Eine Netztrennung der Stromversorgungseinheit ist über die im elektronischen Gerät integrierte Geräte-Steuereinheit dennoch möglich.

Bevorzugt erfolgt die Signalisierung über die Stromversorgungsleitungen zu der externen Stromversorgungseinheit. Das bedeutet, dass zur Steuerung der externen Stromversorgungseinheit keine zusätzlichen Steuerleitungen und -anschlüsse notwendig sind. Die Signalisierung kann beispielsweise durch ein Absinken des Eingangspotentials am elektronischen Gerät erfolgen, welches in der Stromversorgungseinheit erfasst wird.

Vorzugsweise kann die Stromversorgungseinheit zusätzlich durch einen Schalter am elektronischen Gerät ein- oder ausgeschaltet werden. Das bedeutet, dass ein Benutzer einen Abschaltvorgang des elektronischen Gerätes und die Netztrennung seiner Stromversorgungseinheit jederzeit manuell auslösen kann.

Das elektronische Gerät ist ein Peripheriegerät, das über die Schnittstelle an einen Computer angeschlossen werden kann. Das Peripheriegerät kann beispielsweise ein Drucker oder eine externe Festplatte sein.

Vorzugsweise ist die Geräte-Steuereinheit dazu eingerichtet, über die Schnittstelle vom Computer Steuerbefehle, welche einen Betriebszustand des Peripheriegeräts angeben, zu empfangen und in Abhängigkeit davon das Schaltelement zu betätigen. Das bedeutet, dass ein angeschlossener Computer unmittelbar das Abschalten des Peripheriegeräts und mittelbar auch die Netztrennung der Stromversorgungseinheit des Peripheriegeräts steuern kann, falls er beispielsweise das Peripheriegerät über einen längeren Zeitraum nicht benötigt. Ein erneutes Einschalten der Stromversorgungseinheit und schließlich des Peripheriegeräts über die Geräte-Steuereinheit erfolgt mittels Energie, die der Computer über die Schnittstelle bereitstellt. Dadurch ist eine Überwachung der Anforderungen an das Peripheriegerät zum Einschalten trotz gänzlich abgeschalteter Stromversorgungseinheit gewährleistet.

Gemäß einem weiteren Aspekt der Erfindung wird die Aufgabe durch ein Verfahren der eingangs genannten Art dadurch gelöst, dass die Geräte-Steuereinheit erkennt, ob ein Computer über die Schnittstelle mit dem Peripheriegerät verbunden ist, und die Stromversorgungseinheit automatisch vom Wechselstromnetz trennt, falls der Computer nicht mit dem Peripheriegerät verbunden ist, wobei die Geräte-Steuereinheit zum Verbinden der Stromversorgungseinheit mit dem Wechselstromnetz mit Energie aus der Schnittstelle versorgt wird. Dieser Aspekt bringt den Vorteil mit sich, dass das Peripheriegerät nicht unnötig Verlustleistung aus dem Stromnetz aufnimmt, wenn kein Computer an das Peripheriegerät angeschlossen ist. Dies ist beispielsweise der Fall, wenn das Peripheriegerät als Docking-Station zur Aufnahme eines Notebook-Computers ausgeführt ist und sich momentan kein Notebook in der Docking-Station befindet.

Vorzugsweise erkennt die Geräte-Steuereinheit, ob ein über die Schnittstelle mit dem Peripheriegerät verbundener Computer eingeschaltet ist, und trennt die Stromversorgungseinheit automatisch vom Wechselstromnetz, falls der Computer nicht eingeschaltet ist. Bevorzugt trennt die Geräte-Steuereinheit weiterhin die Stromversorgungseinheit automatisch nach einem vorbestimmten Zeitabschnitt ohne Datenaustausch mit einem Computer vom Wechselstromnetz. Das bedeutet, dass ebenfalls eine Netztrennung der Stromversorgungseinheit stattfindet, falls beispielsweise ein Notebook in einer Docking-Station aufgenommen, aber nicht in Betrieb ist oder falls das Notebook über einen längeren Zeitraum keine Daten mit der Docking-Station ausgetauscht hat. Auf diese Weise wird die Aufnahme von Verlustleistung aus dem Stromnetz in der Stromversorgungseinheit eines Peripheriegerätes in jeder Situation vollständig unterbunden, wenn ein Computer nicht oder unzureichend mit dem Peripheriegerät kommuniziert.

Bevorzugt wird die Stromversorgungseinheit unmittelbar oder mit zeitlicher Verzögerung vom Wechselstromnetz getrennt. Bei einem manuellen Abschalten des Peripheriegerätes erfolgt die Netztrennung vorteilhaft unmittelbar. Findet jedoch beispielsweise ein kurzzeitiger Leistungsabfall im Peripheriegerät statt, so wird ein sofortiges Abschalten durch die zeitliche Verzögerung vermieden. Erst bei einem länger andauernden Zustand niedriger Leistungsaufnahme werden die ersten spannungswandelnden Elemente von der Wechselspannung getrennt.

Weitere vorteilhafte Ausgestaltungen, sowie Verfahrensschritte sind in den Unteransprüchen sowie in der Figurenbeschreibung offenbart.

Nachfolgend wird die Erfindung anhand von zwei Zeichnungen näher erläutert.

Es zeigen:
- Figur 1: eine Anordnung aus einem Computer und einem Peripheriegerät mit jeweils einer Stromversorgungseinheit und
- Figur 2: eine weitere Ausführung eines Peripheriegerätes mit einer Stromversorgungseinheit.

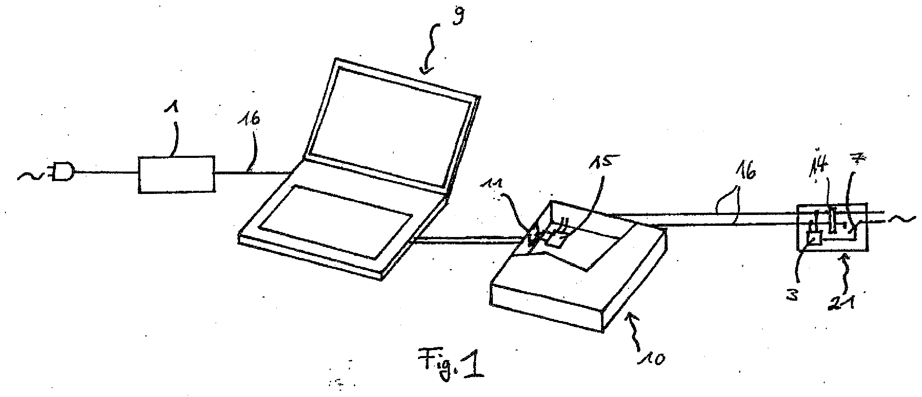

Figur 1 zeigt eine Anordnung, bestehend aus einem tragbaren Computer 9 und einem Peripheriegerät 10, wobei der tragbare Computer 9 über eine Stromversorgungseinheit 1 an das Stromnetz angeschlossen werden kann. Zusätzlich ist eine weitere Stromversorgungseinheit 21 vorgesehen, welche das Peripheriegerät 10 während des Betriebs mit einer Gleichspannung versorgt. Das Peripheriegerät 10 ist über eine Schnittstelle 11 mit dem tragbaren Computer 9 verbunden. Die Stromversorgungseinheiten 1, 21 können beispielsweise als primär getaktete Stromversorgungseinheiten ausgeführt sein, welche aus einer primärseitigen Wechselspannung eine sekundärseitige Gleichspannung zur Versorgung eines angeschlossenen elektronischen Gerätes 9 oder 10 erzeugen. Dazu sind erste spannungswandelnde Elemente 14 vorgesehen, die zum Beispiel einen Gleichrichter, einen Zerhacker, einen Übertrager und einen Spannungsregler umfassen können.

Die Wechselspannung wird zunächst über den Gleichrichter gleichgerichtet. Anschließend wird aus der gleichgerichteten Spannung über den Zerhacker ein hochfrequentes Rechteckssignal erzeugt, wobei die Frequenz üblicherweise im Bereich von 20 kHz bis 200 kHz liegt. Anschließend wird das Hochfrequenzsignal in einem Übertrager auf eine niedrigere Spannung transformiert. Auf der Niederspannungsseite einer Stromversorgungseinheit 1, 21, im folgenden auch Sekundärseite genannt, wird die transformierte Spannung in einem Spannungsregler schließlich stabilisiert und geglättet. Nach diesen Vorgängen steht eine Gleichspannung auf der Sekundärseite zur Versorgung eines elektronischen Gerätes 9, 10 zur Verfügung.

Wird das Peripheriegerät 10 nicht vom Computer 9 benötigt, so kann das Peripheriegerät 10 vom Computer 9 aus über die Schnittstelle 11 abgeschaltet werden. Dazu übermittelt der Computer einen Steuerbefehl an das Peripheriegerät 10. Dieser Abschaltbefehl wird dabei von einer Geräte-Steuereinheit 15 detektiert, welche im Peripheriegerät 10 angeordnet ist.

Bei einem abgeschalteten Peripheriegerät 10 erzeugt - ohne weitere Maßnahmen - dessen Stromversorgungseinheit 21 trotzdem eine Gleichspannung, was mit Verlusten einhergeht. Gemäß der Erfindung wird auch die Stromversorgungseinheit 21 des Peripheriegeräts 10 primärseitig vom Wechselspannungsnetz getrennt und dadurch abgeschaltet.

Dies ist dadurch möglich, dass eine Geräte-Steuereinheit 15 im Peripheriegerät eine Abschaltnachricht an eine Steuereinheit 3 der Stromversorgungseinheit 21 sendet, welche das Abtrennen der spannungswandelnden Elemente in der Stromversorgungseinheit 21 veranlasst. Dabei wird ein primärseitiges Schaltelement 7 geöffnet. Sowohl das Peripheriegerät 10 als auch die Stromversorgungseinheit 21 des Peripheriegerätes 10 sind nun abgeschaltet und die Stromversorgungseinheit 21 des Peripheriegerätes 10 komplett vom Wechselstromnetz getrennt.

Wenn der Computer 9 das Peripheriegerät 10 erneut benötigt, so sendet der Computer 9 einen entsprechenden Befehl über die Schnittstelle 11 an die Geräte-Steuereinheit 15. Die Geräte-Steuereinheit 15 wird über die Spannung auf der Schnittstelle 11 versorgt und ist deshalb, vorausgesetzt der Computer 9 ist eingeschaltet, auch im abgeschalteten Zustand des Peripheriegeräts 10 funktionsfähig. Ein Einschaltbefehl kann deshalb von der Geräte-Steuereinheit 15 detektiert werden.

Damit auch die Steuereinheit 3 der Stromversorgungseinheit 21 die Stromversorgungseinheit in einen eingeschalteten Zustand steuern kann, wird sie vorzugsweise von dem Peripheriegerät 10 aus mit einer Versorgungsspannung versorgt. Beispielsweise wird die vom Computer 9 an der Schnittstelle 11 bereitgestellte Spannung von der Geräte-Steuereinheit 15 auf die Leitung zwischen Peripheriegerät 10 und Stromversorgungseinheit 21 gelegt. Dadurch erhält die Steuereinheit 3 die erforderliche Versorgungsspannung und, je nach Ausgestaltung der Geräte-Steuereinheit 15 und der Steuereinheit 3 der Stromversorgungseinheit 21, gleichzeitig die Nachricht, in den eingeschalteten Betriebszustand überzugehen. Nachfolgend wird das Schaltelement 7 geschlossen und somit die Stromversorgungseinheit 21 an das Wechselstromnetz angeschlossen. Nach diesen Vorgängen kann das Peripheriegerät 10 mit Betriebsspannung versorgt werden.

Verschiedene Betriebszustände könnten auch durch verschiedene Spannungen an der Schnittstelle 11 und den Leitungen 16 oder durch eine Signalfolge signalisiert werden.

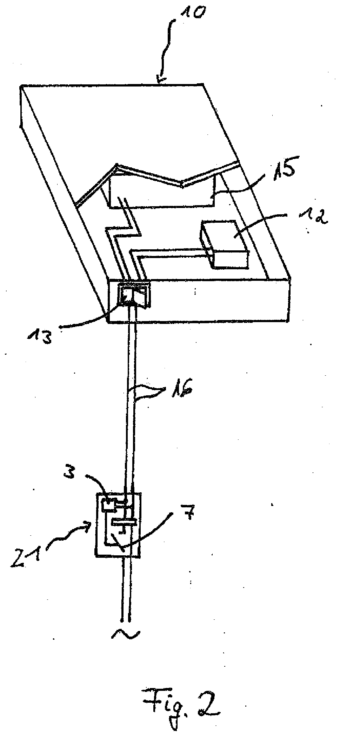

Figur 2 zeigt eine weitere Ausführung eines Peripheriegerätes 10, welches über eine Stromversorgungseinheit 21 versorgt wird. Zusätzlich ist am Peripheriegerät 10 ein Schalter 13 angeordnet, durch den sich die Stromversorgungseinheit 21 und damit das Peripheriegerät 10 an- oder abschalten lässt. Ist das Peripheriegerät 10 in Betrieb, so ist das Schaltelement 7 in der Stromversorgungseinheit 21 geschlossen und das Peripheriegerät 10 wird mit Spannung versorgt.

Wird der Schalter 13 nun betätigt, schaltet das Peripheriegerät 10 ab und sendet eine Nachricht an die Steuereinheit 3 in der Stromversorgungseinheit 21. Diese öffnet anschließend das Schaltelement 7. Somit ist die Stromversorgungseinheit 21 vom Wechselstromnetz getrennt. Wird der Schalter 13 zum erneuten Einschalten des Peripheriegerätes 10 betätigt, so wird die Spannung aus einer Batterie 12 auf die Leitung zwischen Peripheriegerät 10 und Stromversorgungseinheit 21 gelegt und die Steuereinheit 3 dazu veranlasst, das Schaltelement 7 wieder zu schließen, wodurch das Peripheriegerät 10 erneut mit Spannung versorgt wird. Die Batterie 12 ist zur Spannungsversorgung notwendig, falls das Peripheriegerät 10 nicht über einen Computer 9 gesteuert werden kann oder dieser ausgeschaltet ist. Dies findet beispielsweise Anwendung bei einem Drucker mit Kopierfunktion.

In einem nicht dargestellten Ausführungsbeispiel ist das elektronische Gerät ein Notebook-Computer, welcher mit einer externen Stromversorgungseinheit verbunden ist und zudem standardmäßig eine Batterie 12 aufweist. Die Stromversorgungseinheit ist dazu eingerichtet, von dem Notebook-Computer eine Nachricht zu erhalten, wenn sie primärseitig eingeschaltet werden soll. Die Nachricht wird dabei über die Stromversorgungsleitungen zwischen dem Notebook-Computer und der Stromversorgungseinheit übermittelt. Die dazu notwendige Energie wird der Batterie 12 entnommen.

In einer Abwandlung dieses Ausführungsbeispiels ist zwischen den Notebook-Computer und die Stromversorgungseinheit eine Docking-Station geschaltet. Eine Docking-Station ist mit dem Notebook-Computer typischerweise über einen einzigen Steckverbinder verbunden, über den sowohl die Versorgungsspannung als auch Daten und/oder Bildsignale übertragen werden. An der Docking-Station ist eine Vielzahl von Anschlüssen vorgehen, um eine Stromversorgungseinheit und Peripheriegeräte wie Drucker, Scanner, Tastaturen oder Mäuse sowie einen Monitor anzuschließen. In einer ersten Variante erhält die Docking-Station eine Nachricht von dem Notebook-Computer und leitet diese an die Stromversorgungseinheit weiter. In einer zweiten Variante erkennt die Docking-Station, ob der Notebook-Computer eingeschaltet ist, und veranlasst die Netztrennung der Stromversorgungseinheit, falls der Notebook-Computer ausgeschaltet ist.

In einer weiteren Variante erkennt die Docking-Station das Andocken oder Abdocken des Notebook-Computers und erzeugt daraufhin eine entsprechende Nachricht an die Stromversorgungseinheit, um diese primärseitig mit der Wechselspannung zu verbinden bzw. von ihr zu trennen.

Die Ausführungsformen sind nicht auf die dargestellten Figuren beschränkt. So kann ein Peripheriegerät 10 gemäß Figur 2 ebenfalls über eine Schnittstelle zum Anschluss an ein Computernetzwerk verfügen, wobei die Steuerbefehle in Form von digitalen Nachrichten über die Schnittstelle an die Stromversorgungseinheit 21 gesendet werden können. Dadurch ist z. B. die Befehlsunterscheidung mehrerer Rechner des Netzwerkes oder das Versenden von Informationen über einen bestimmten Abschaltzeitpunkt oder eine bestimmte Betriebsdauer möglich. Wird das Peripheriegerät 10 neben der Anbindung an ein Netzwerk noch für andere Anwendungen, z. B. als Kopierer, verwendet, so kann das Peripheriegerät 10 und seine Stromversorgungseinheit 21 über den Schalter 13 manuell an- oder abgeschaltet werden.

### Bezugszeichenliste

- 1: Stromversorgungseinheit
- 3: Steuereinheit
- 7: Schaltelement
- 9: Computer
- 10: Peripheriegerät
- 11: Schnittstelle
- 12: Batterie
- 13: Schalter
- 14: erste spannungswandelnde Elemente
- 15: Geräte-Steuereinheit
- 16: Stromversorgungsleitungen
- 21: Stromversorgungseinheit

## Patentansprüche

1. Elektronisches Gerät mit
- einer Stromversorgungseinheit (1,21), die erste spannungswandelnde Elemente (14) aufweist, um aus einer primärseitigen Wechselspannung eine sekundärseitige Gleichspannung zur Versorgung des elektronischen Geräts zu erzeugen,
- mindestens einer Schnittstelle (11),
- einem Schaltelement (7), durch welches die ersten spannungswandelnden Elemente (14) von der primärseitigen Wechselspannung getrennt werden können, sowie
- einer Geräte-Steuereinheit (15), welcher über die mindestens eine Schnittstelle (11) zumindest zeitweise eine Versorgungsspannung zugeführt werden kann,
wobei die Geräte-Steuereinheit (15) dazu eingerichtet ist, eine Betätigung des Schaltelements (7) in Abhängigkeit des Leistungsbedarfs des elektronischen Geräts zu veranlassen und wobei die Geräte-Steuereinheit (15) dazu eingerichtet ist, das Schaltelement (7) zu öffnen, während sie mit Energie aus der primärseitigen Wechselspannung versorgt wird, wohingegen die Geräte-Steuereinheit (15) zum Schließen des Schaltelements (7) mit Energie aus der Schnittstelle (11) versorgt wird,
**dadurch gekennzeichnet, dass**
- das elektronische Gerät ein Peripheriegerät (10) ist, das über die Schnittstelle (11) an einen Computer (9) angeschlossen werden kann,
- die Geräte-Steuereinheit (15) dazu eingerichtet ist, zu erkennen, ob der Computer (9) mit dem Peripheriegerät (10) über die Schnittstelle (11) verbunden ist und
- die Geräte-Steuereinheit (15) das Schaltelement (7) veranlasst, die ersten spannungswandelnden Elemente (14) von der primärseitigen Wechselspannung sofort oder mit zeitlicher Verzögerung zu trennen, wenn der Computer (9) nicht über die Schnittstelle (11) mit dem Peripheriegerät (10) verbunden ist.

2. Elektronisches Gerät nach Anspruch 1,
**dadurch gekennzeichnet, dass**
- die Stromversorgungseinheit (1,21) eine externe Stromversorgungseinheit ist und
- das elektronische Gerät durch die Geräte-Steuereinheit (15) dazu eingerichtet ist, der Stromversorgungseinheit (1,21) zu signalisieren, ob das Schaltelement (7) die ersten spannungswandelnden Elemente (14) mit der Wechselspannung verbinden soll.

3. Elektronisches Gerät nach Anspruch 2,
**dadurch gekennzeichnet, dass** die Signalisierung über die Stromversorgungsleitungen (16) zu der externen Stromversorgungseinheit (1,21) erfolgt.

4. Elektronisches Gerät nach einem der Ansprüche 1 bis 3,
**dadurch gekennzeichnet, dass**
die Stromversorgungseinheit (1,21) zusätzlich durch einen Schalter (13) am elektronischen Gerät ein- oder ausgeschaltet werden kann.

5. Peripheriegerät (10) nach einem der Ansprüche 1 bis 4,
**dadurch gekennzeichnet, dass**
- die Geräte-Steuereinheit (15) dazu eingerichtet ist, zu erkennen, ob ein mit dem Peripheriegerät verbundener Computer (9) eingeschaltet ist und
- die Geräte-Steuereinheit (15) das Schaltelement (7) veranlasst, die ersten spannungswandelnden Elemente (14) von der primärseitigen Wechselspannung sofort oder mit zeitlicher Verzögerung zu trennen, wenn der Computer (9) nicht eingeschaltet ist.

6. Peripheriegerät (10) nach Anspruch 5,
**dadurch gekennzeichnet, dass**
die Geräte-Steuereinheit (15) dazu eingerichtet ist, zu erkennen, ob ein Zeitabschnitt ohne Datenaustausch mit dem Computer (9) über die Schnittstelle (11) erfolgt ist, und in Abhängigkeit davon das Schaltelement (7) veranlasst, die ersten spannungswandelnden Elemente (14) von der primärseitigen Wechselspannung zu trennen.

7. Peripheriegerät (10) nach Anspruch 5 oder 6,
**dadurch gekennzeichnet, dass**
die Geräte-Steuereinheit (15) dazu eingerichtet ist, über die Schnittstelle (11) vom Computer (9) Steuerbefehle, welche einen Betriebszustand des Peripheriegeräts angeben, zu empfangen und in Abhängigkeit davon das Schaltelement (7) zu betätigen.

8. Peripheriegerät (10) nach einem der Ansprüche 1 bis 7,
**dadurch gekennzeichnet, dass**
das Peripheriegerät (10) eine Docking-Station eines tragbaren Computers (9) ist.

9. Docking-Station nach Anspruch 8,
**dadurch gekennzeichnet, dass**
zur zumindest zeitweisen Versorgung der Geräte-Steuereinheit (15) Energie aus einer wiederaufladbaren Batterie des tragbaren Computers (9) entnehmbar ist, wobei die Energieübertragung zur Docking-Station über die Schnittstelle (11) erfolgt.

10. Verfahren zur Stromsparsteuerung eines elektronischen Peripheriegerätes (10) mit einer Geräte-Steuereinheit (15), wobei das Peripheriegerät (10) über eine Schnittstelle (11) mit einem Computer (9) verbunden werden kann und über eine Stromversorgungseinheit (1,21) mit elektrischer Energie aus einem Wechselstromnetz versorgt wird,
**dadurch gekennzeichnet, dass**
die Geräte-Steuereinheit (15) erkennt, ob ein Computer (9) über die Schnittstelle (11) mit dem Peripheriegerät (10) verbunden ist, und die Stromversorgungseinheit (1,21) automatisch vom Wechselstromnetz trennt, falls der Computer (9) nicht mit dem Peripheriegerät (10) verbunden ist,
wobei die Geräte-Steuereinheit (15) zum Verbinden der Stromversorgungseinheit (1,21) mit dem Wechselstromnetz mit Energie aus der Schnittstelle (11) versorgt wird.

11. Verfahren nach Anspruch 10,
**dadurch gekennzeichnet, dass**
die Geräte-Steuereinheit (15) erkennt, ob ein über die Schnittstelle (11) mit dem Peripheriegerät (10) verbundener Computer (9) eingeschaltet ist, und die Stromversorgungseinheit (1,21) automatisch vom Wechselstromnetz trennt, falls der Computer (9) nicht eingeschaltet ist.

12. Verfahren nach Anspruch 10 oder 11,
**dadurch gekennzeichnet, dass**
die Geräte-Steuereinheit (15) die Stromversorgungseinheit (1,21) automatisch nach einem vorbestimmten Zeitabschnitt ohne Datenaustausch mit einem Computer (9) vom Wechselstromnetz trennt.

13. Verfahren nach einem der Ansprüche 10 bis 12,
**dadurch gekennzeichnet, dass**
die Stromversorgungseinheit (1,21) unmittelbar oder mit zeitlicher Verzögerung vom Wechselstromnetz getrennt wird.

14. Verfahren nach einem der Ansprüche 10 bis 13,
**dadurch gekennzeichnet, dass**
die Geräte-Steuereinheit (15) die Stromversorgungseinheit (1,21) mit dem Wechselstromnetz verbindet oder davon trennt, falls ein Computer (9) über die Schnittstelle (11) einen entsprechenden Steuerbefehl an das Peripheriegerät (10) sendet.

## Claims

1. Electronic device, comprising:
- a power supply unit (1, 21) comprising first voltage-converting elements (14), in order to generate a secondary-side DC voltage for the supply of an electronic device from a primary-side AC voltage,
- at least one interface (11),
- a switching element (7), by means of which the first voltage-converting elements (14) can be disconnected from the primary-side AC voltage, as well as
- a device control unit (15), to which, via the at least one interface (11), a supply voltage can at least temporarily be supplied,
wherein the device control unit (15) is configured to cause an actuation of the switching element (7) depending on the power requirement of the electronic device, and wherein the device control unit (15) is configured to open the switching element (7) while being supplied with energy from the primary-side AC voltage, whereas the device control unit (15) is supplied with energy from the interface (11) for closing the switching element (7), **characterized in that**
- the electronic device is a peripheral device (10), which can be connected to a computer (9) via the interface (11),
- the device control unit (15) is configured to recognize if the computer (9) is connected to the peripheral device (10) via the interface (11), and
- the device control unit (15) causes the switching element (7) to disconnect the first voltage-converting elements (14) from the primary-side AC voltage, immediately or time-delayed, if the computer (9) is not connected to the peripheral device (10) via the interface (11).

2. Electronic device according to claim 1,
**characterized in that**
- the power supply unit (1, 21) is an external power supply unit, and
- the electronic device is configured, by the device control unit (15), to signalize to the power supply unit (1, 21) whether the switching element (7) is to connect the first voltage-converting elements (14) to the AC voltage.

3. Electronic device according to claim 2,
**characterized in that** the signaling occurs via the power supply lines (16) to the external power supply unit (1, 21).

4. Electronic device according to any of claims 1 to 3,
**characterized in that**
the power supply unit (1, 21) can additionally be switched-on or switched-off by a switch (13) on the electronic device.

5. Peripheral device (10) according to any of claims 1 to 4,
**characterized in that**
- the device control unit (15) is configured to detect whether a computer (9) connected to the peripheral device is turned-on, and
- the device control unit (15) causes the switching element (7) to disconnect the first voltage-converting elements (14) from the primary-side AC voltage, immediately or time-delayed, if the computer (9) is not turned-on.

6. Peripheral device (10) according to claim 5,
**characterized in that**
the device control unit (15) is configured to detect whether there was a time interval without data exchange with the computer (9) via the interface (11) and, dependent thereupon, causes the switching element (7) to disconnect the first voltage-converting elements (14) from the primary-side AC voltage.

7. Peripheral device (10) according to claim 5 or 6,
**characterized in that**
the device control unit (15) is configured to receive control commands (11), that indicate an operating state of the peripheral device, from the computer (9) via the interface (11) and, dependent thereupon, to actuate the switching element (7).

8. Peripheral device (10) according to any of claims 1 to 7,
**characterized in that**
the peripheral device (10) is a docking station of a portable computer (9).

9. Docking station according to claim 8,
**characterized in that**
for at least temporarily supplying the device control unit (15), energy can be taken from a rechargeable battery of the portable computer (9), wherein the energy transfer to the docking station is effected via the interface (11).

10. Method for power saving control of an electronic peripheral device (10) with a device control unit (15), wherein the peripheral device (10) can be connected to a computer (9) via an interface (11), and is supplied with electric energy from an AC power grid via a power supply unit (1, 21),
**characterized in that**
the device control unit (15) detects whether a computer (9) is connected with the peripheral device (10) via the interface (11), and automatically disconnects the power supply unit (1, 21) from the AC power grid, if the computer (9) is not connected with the peripheral device (10), wherein the device control unit (15), for connecting the power supply unit (1, 21) with the AC power grid, is supplied with energy from the interface (11).

11. Method according to claim 10,
**characterized in that**
the device control unit (15) detects whether a computer (9) connected with the peripheral device (10) via the interface (11) is turned-on, and automatically disconnects the power supply unit (1, 21) from the AC power grid if the computer (9) is not turned-on.

12. Method according to claim 10 or 11,
**characterized in that**
after a predetermined time interval without data exchange with a computer (9), the device control unit (15) automatically disconnects the power supply unit (1, 21) from the AC power grid.

13. Method according to any of claims 10 to 12,
**characterized in that**
the power supply unit (1,21) is disconnected from the AC power grid directly or time-delayed.

14. Method according to any of claims 10 to 13,
**characterized in that**
the device control unit (15) connects the power supply unit (1, 21) with the AC power grid, or disconnects it, if a computer (9) transmits a corresponding control command to the peripheral device (10) via the interface (11).

## Revendications

1. Appareil électronique, comprenant
- une unité d'alimentation électrique (1,21), qui comporte de premiers éléments transformateurs de tension (14) pour générer à partir d'une tension alternative côté primaire une tension continue côté secondaire dans le but d'alimenter l'appareil électronique,
- au moins une interface (11),
- un élément de commutation (7), par lequel les premiers éléments transformateurs de tension (14) peuvent être coupés de la tension alternative côté primaire, ainsi que
- une unité de commande-appareil (15), vers laquelle il est possible de fournir, au moins temporairement, une tension d'alimentation via l'au moins une interface (11),
l'unité de commande-appareil(15) étant configurée pour provoquer un actionnement de l'élément de commutation (7) en fonction des besoins de puissance de l'appareil électronique et l'unité de commande-appareil(15) étant configurée pour ouvrir l'élément de commutation (7) tandis qu'elle est alimentée en énergie à partir de la tension alternative côté primaire, alors que l'unité de commande-appareil(15) est alimentée en énergie depuis l'interface (11) pour fermer l'élément de commutation (7), **caractérisé en ce que**
- l'appareil électronique est un appareil périphérique (10) qui peut être connecté à un ordinateur (9) via l'interface (11),
- l'unité de commande de l'appareil (15) est configurée pour reconnaître si l'ordinateur (9) est relié à l'appareil périphérique (10) via l'interface (11) et **en ce que**
- l'unité de commande de l'appareil (15) incite l'élément de commutation (7) à couper, immédiatement ou avec un retard, les premiers éléments transformateurs de tension (14) de la tension alternative côté primaire, lorsque l'ordinateur (9) n'est pas relié à l'appareil périphérique (10) via l'interface (11).

2. Appareil électronique selon la revendication 1, **caractérisé en ce que**
- l'unité d'alimentation électrique (1, 21) est une unité d'alimentation électrique externe et **en ce que**
- l'appareil électronique est configuré par l'unité de commande de l'appareil (15) pour signaler à l'unité d'alimentation électrique (1,21) si l'élément de commutation (7) doit relier les premiers éléments transformateurs de tension (14) à la tension alternative.

3. Appareil électronique selon la revendication 2, **caractérisé en ce que** la signalisation se fait par l'intermédiaire des lignes d'alimentation électrique (16) vers l'unité d'alimentation électrique externe (1, 21).

4. Appareil électronique selon l'une quelconque des revendications 1 à 3, **caractérisé en ce que** l'unité d'alimentation électrique (1, 21) peut également être activée ou désactivée par un interrupteur (13) sur l'appareil électronique.

5. Appareil périphérique (10) selon l'une quelconque des revendications 1 à 4, **caractérisé en ce que**
- l'unité de commande de l'appareil (15) est configurée pour reconnaître si un ordinateur (9) relié à l'appareil périphérique est activé et **en ce que**
- l'unité de commande de l'appareil (15) incite l'élément de commutation (7) à couper les premiers éléments transformateurs de tension (14) de la tension alternative côté primaire, immédiatement ou avec un retard, lorsque l'ordinateur (9) n'est pas activé.

6. Appareil périphérique (10) selon la revendication 5,
**caractérisé en ce que**
l'unité de commande de l'appareil (15) est configurée pour reconnaître s'il y a eu un intervalle de temps sans échange de données avec l'ordinateur (9) via l'interface (11), et, en fonction de cela, pour inciter l'élément de commutation (7) à couper les premiers éléments transformateurs de tension (14) de la tension alternative côté primaire.

7. Appareil périphérique (10) selon la revendication 5 ou 6, **caractérisé en ce que**
l'unité de commande de l'appareil (15) est configurée pour recevoir des commandes de contrôle de l'ordinateur (9) via l'interface (11), lesdits commandes indiquant un état de fonctionnement de l'appareil périphérique, et pour, en fonction de cela, actionner l'élément de commutation (7).

8. Appareil périphérique (10) selon l'une quelconque des revendications 1 à 7,
**caractérisé en ce que**
l'appareil périphérique (10) est une station d'accueil d'un ordinateur portable (9).

9. Station d'accueil selon la revendication 8,
**caractérisée en ce que**
de l'énergie peut être prélevée d'une batterie rechargeable de l'ordinateur portable (9) pour alimenter, au moins temporairement, l'unité de commande de l'appareil (15), la transmission d'énergie vers la station d'accueil étant effectuée par l'intermédiaire de l'interface (11).

10. Procédé de commande d'économie de courant d'un appareil périphérique électronique (10) avec une unité de commande-appareil (15), dans lequel l'appareil périphérique (10) peut être relié à un ordinateur (9) via une interface (11) et est alimenté via une unité d'alimentation électrique (1, 21) en énergie électrique à partir d'un réseau de courant alternatif, **caractérisé en ce que**
l'unité de commande-appareil (15) reconnaît si un ordinateur (9) est relié à l'appareil périphérique (10) via l'interface (11) et coupe automatiquement l'unité d'alimentation électrique (1, 21) du réseau de courant alternatif, si l'ordinateur (9) n'est pas relié à l'appareil périphérique (10), l'unité de commande-appareil (15) étant alimentée en énergie depuis l'interface (11) pour relier l'unité d'alimentation électrique (1, 21) au réseau de courant alternatif.

11. Procédé selon la revendication 10,
**caractérisé en ce que** l'unité de commande de l'appareil (15) reconnaît si un ordinateur (9) relié à l'appareil périphérique (10) via l'interface (11) est en marche et coupe automatiquement l'unité d'alimentation électrique (1, 21) du réseau de courant alternatif, si l'ordinateur (9) n'est pas en marche.

12. Procédé selon la revendication 10 ou 11,
**caractérisé en ce que** l'unité de commande-appareil (15) coupe automatiquement l'unité d'alimentation électrique (1, 21) du réseau de courant alternatif après un intervalle de temps prédéterminé sans aucun échange de données avec un ordinateur (9) .

13. Procédé selon l'une quelconque des revendications 10 à 12, **caractérisé en ce que**
l'unité d'alimentation électrique (1, 21) est coupée, directement ou avec un retard, du réseau de courant alternatif.

14. Procédé selon l'une quelconque des revendications 10 à 13, **caractérisé en ce que**
l'unité de commande de l'appareil (15) relie l'unité d'alimentation électrique (1, 21) au réseau de courant alternatif ou l'en coupe, si un ordinateur (9), via l'interface (11), transmet une commande de contrôle respective à l'appareil périphérique (10).
